# EUROPÄISCHE PATENTSCHRIFT

(11) **EP 2 733 019 B1**
(45) Veröffentlichungstag und Bekanntmachung des Hinweises auf die Patenterteilung: **11.03.2015**
(21) Anmeldenummer: 13004818.4
(22) Anmeldetag: 07.10.2013
(51) Int. Cl.: B60R 7/04, B60N 2/44

(54) **Befestigungssystem zum Befestigen einer Staubox in einem Kraftfahrzeug**
Attachment system for attachment of a storage container in a motor vehicle
Système de fixation pour la fixation d'un coffret de rangement dans un véhicule automobile

(30) Priorität: 16.11.2012 DE 102012022405
(43) Veröffentlichungstag der Anmeldung: 21.05.2014
(73) Patentinhaber: KAMEI automotive GmbH, 38448 Wolfsburg (DE)
(72) Erfinder: Schulze, Dirk, 29378 Wittingen (DE)
(74) Vertreter: Friedrich, Andreas

(56) Entgegenhaltungen:
- EP-A2- 1 502 810
- WO-A1-00/07847
- DE-A1- 19 909 728
- DE-U1-202010 017 386
- US-A- 5 868 294
- US-A1- 2002 175 531

## Beschreibung

Die Erfindung betrifft ein Befestigungssystem zum Befestigen einer Staubox in einem Kraftfahrzeug, das wenigstens einen Kraftfahrzeugsitz mit einem Sitzgestell aufweist, wobei das Sitzgestell wenigstens eine Ausnehmung aufweist.

Bei einer Vielzahl unterschiedlicher Kraftfahrzeuge, beispielsweise Liefer-, Werkstatt- oder Einsatzfahrzeuge, ist es nötig, eine Vielzahl unterschiedlichster Gegenstände zu transportieren. Dies können Werkzeuge oder Ersatzteile aber auch Akten, tragbare Computer oder auch Handfeuerwaffen sein. Für alle diese Gegenstände müssen Staumöglichkeiten geschaffen werden, da die herkömmlicherweise vom Hersteller des Kraftfahrzeugs vorgesehenen Staumöglichkeiten nicht ausreichen oder beispielsweise an Stellen im Kraftfahrzeug vorgesehen sind, die während der Fahrt nicht erreichbar sind. Dies ist jedoch insbesondere bei Einsatzfahrzeugen, beispielsweise von Feuerwehr oder Polizei, notwendig, um schnell auf sich ändernde Einsatzziele oder den Verlauf eines Einsatzes reagieren zu können. Dabei kann es nötig werden, auf Akten, Schreibgeräte, Telekommunikationsmittel, Haltekellen oder Handfeuerwaffen schnell und unproblematisch auch während der Fahrt zugreifen zu können.

Zu diesem Zweck ist beispielsweise aus der DE 20 2010 017 386 eine Staubox bekannt, die zwischen dem Beifahrer- und dem Fahrersitz eines Kraftfahrzeuges angeordnet werden kann. Dies ist insbesondere bei Nutzfahrzeugen von Interesse, da an dieser Stelle bei diesen Fahrzeugen ausreichend Platz ist, um eine derartige Box dort zu positionieren. Um diese Staubox zwischen dem Fahrer- und Beifahrersitz eines Kraftfahrzeuges anzuordnen, wird sie beispielsweise am Fahrzeugboden festgeschraubt. Dazu müssen Bohrungen im Fahrzeugboden vorgenommen werden, in die dann die zur Befestigung zu verwendenden Schrauben eingreifen.

Diese Art der Befestigung ist zwar einfach und insbesondere auch von ungelernten Arbeitskräften durchführbar, führt jedoch dazu, dass im Fahrzeugboden Löcher zurückbleiben, die ursprünglich nicht vorhanden waren. Dies senkt den Wiederverkaufswert eines derartigen Fahrzeugs drastisch. Insbesondere bei Fahrzeugen der Einsatzkräfte sollen die Fahrzeuge jedoch nach einer bestimmten Dienstzeit weiterverkauft werden. Dabei ist es von großer Bedeutung, die Fahrzeuge im möglichst originalgetreuen Zustand und mit möglichst wenig Beschädigungen und/oder baulichen Veränderungen dem Markt anbieten zu können. Zudem hat das Anschrauben einer Staubox am Fahrzeugboden den Nachteil, dass dies nur an relativ wenigen Stellen im Kraftfahrzeug möglich ist. Personen, die beispielsweise auf Kraftfahrzeugsitzen sitzen, die eine Rückbank des Kraftfahrzeuges bilden, ist der Zugriff auf derartige Staumöglichkeiten oftmals verwehrt.

Aus der gattungsgemäßen US 2002/0175531 A1 ist eine Multifunktionskonsole bekannt, die zwischen zwei Sitzen eines Kraftfahrzeugs befestigbar ist. Dazu muss einer der Fahrzeugsitze aus dem Kraftfahrzeug entfernt werden, so dass die Konsole an der Befestigungseinrichtung für den Sitz angeordnet werden kann.

Aus der EP 1 502 810 A2 ist eine Sitzanordnung für Fahrzeuge bekannt, bei der ein Teil der Rückenlehne des Kraftfahrzeugsitzes vom Kraftfahrzeugsitz lösbar ausgebildet ist. An diesem Teil befindet sich neben der Kopfstütze auch ein Raum für ein Ablagefach oder einen Monitor.

Aus der DE 199 09 728 A1 sowie der DE 20 2010 017 386 U1 ist jeweils eine Staubox bekannt, die zwischen zwei Sitzen eines Kraftfahrzeuges positionierbar ist.

Ähnliche Stauboxen werden auch in der WO 00/07847 sowie der US 5,868,294 beschrieben, wobei diese jedoch über Gurte an den jeweiligen Rückenlehnen der Fahrzeugsitze befestigt werden.

Der Erfindung liegt somit die Aufgabe zugrunde, ein Befestigungssystem zum Befestigen einer Staubox in einem Kraftfahrzeug vorzuschlagen, das einen flexibleren Einsatz entsprechender Stauboxen ermöglicht und zudem ohne bauliche Veränderungen oder Beschädigungen des Kraftfahrzeuges auskommt.

Die Erfindung löst die gestellte Aufgabe durch ein gattungsgemäßes Befestigungssystem, das sich dadurch auszeichnet, dass es wenigstens ein Positionierelement umfasst, das wenigstens ein erstes Befestigungselement zum Befestigen des Positionierelementes an der Staubox und wenigstens ein zweites Befestigungselement zum Befestigen des Positionierelementes an dem Sitzgestell aufweist, wobei das wenigstens eine zweite Befestigungselement ausgebildet ist, um in die wenigstens eine Ausnehmung des Sitzgestells einzugreifen.

Zum Befestigen der Staubox in dem Kraftfahrzeug wird folglich das wenigstens eine Positionierelement an der zu befestigenden Staubox angeordnet. Dies kann beispielsweise durch Schraubverbindungen oder Nietverbindungen geschehen oder durch Klemm- und Rastvorrichtungen erreicht werden. Alternativ oder zusätzlich dazu kann das wenigstens eine Positionierelement auch an der Staubox angeklebt werden. In diesem Fall bildet die Klebefläche das wenigstens eine erste Befestigungselement.

Um nun die Staubox im Kraftfahrzeug sicher anzuordnen, macht sich die Erfindung zunutze, dass ein Sitzgestell eines Kraftfahrzeugsitzes an bestimmten Stellen Ausnehmungen aufweist. Diese können beispielsweise dadurch notwendig sein, dass bewegliche Teile im Sitzgestell vorgesehen sind, um beispielsweise den Kraftfahrzeugsitz in seiner Position und/oder Neigung und Ausrichtung zu verändern. Zudem werden bei massiven Metallteilen, die die Basis des Sitzgestelles bilden, oftmals Ausnehmungen vorgesehen, um eine Gewichtsersparnis zu erreichen. Das wenigstens eine zweite Befestigungselement des Positionierelementes ist nun ausgebildet, in diese wenigstens eine Ausnehmung des Sitzgestells einzugreifen. Dadurch wird eine Positionierung der Staubox relativ zum Sitzgestell und damit relativ zum Kraftfahrzeugsitz erreicht, ohne dass bauliche Veränderungen am Kraftfahrzeug vorgenommen werden müssten. Dies bedeutet, dass insbesondere die Staubox auch rückstandsfrei und nahezu spurlos wieder aus dem Kraftfahrzeug entfernt werden kann, so dass der Weiterverkauf nicht durch optisch störende Rückstände erschwert wird.

Das wenigstens eine zweite Befestigungselement kann dabei beispielsweise Bohrungen oder Löcher am Positionierelement aufweisen, durch die Schrauben geführt werden können. Diese Schrauben werden zudem durch die wenigstens eine Ausnehmung am Sitzgestell des Kraftfahrzeugsitzes geführt und beispielsweise mittels einer Mutter fixiert. Gegebenenfalls können auch auf der dem Positionierelement abgewandten Seite der Ausnehmung im Sitzgestell des Kraftfahrzeuges zusätzliche Hinterlegelemente, beispielsweise Metallplatten, angeordnet werden, um zu verhindern, dass die Schraube mit samt der Mutter durch die Ausnehmung des Sitzgestells gezogen wird. Dies ist insbesondere dann von Vorteil, wenn die Ausnehmung relativ groß ausgebildet ist. Die Bohrungen oder Löcher bilden gemeinsam mit den vorgesehenen Schrauben oder anderen Elementen, die durch die Bohrungen oder Löcher geführt werden sollen, sowie den gegebenenfalls nötigen Hinterlegelementen die jeweiligen Befestigungselemente.

Natürlich ist es alternativ oder zusätzlich dazu auch möglich, wenigstens eines der zweiten Befestigungselemente in Form von Klips- oder Schnappverbindern auszubilden. So können die Befestigungselemente beispielsweise als Rasthaken ausgebildet werden, die zum Positionieren des Positionierelementes an dem Kraftfahrzeugsitz durch die wenigstens eine Ausnehmung des Sitzgestells hindurchgeführt werden und dort in eine dort gegebenenfalls vorhandene Hinterschneidung schnappen. Auch dies führt beispielsweise bei einer ausreichenden Anzahl der Befestigungselemente zu einer ausreichenden Stabilität und Sicherheit der Befestigung.

In einer besonders einfachen Ausgestaltung ist das wenigstens eine erste Befestigungselement eingerichtet, in dafür in der Staubox vorgesehene Ausnehmungen einzugreifen. Auch hier können Schnapp- oder Rastverbindungen oder auch Schraub- oder Nietverbindungen vorgesehen sein. Damit lässt sich das Positionierelement einfach und dennoch sicher lösbar an der Staubox befestigen.

Sowohl die Befestigung des Positionierelementes an der Staubox als auch die Befestigung des Positionierelementes am Sitzgestell des Kraftfahrzeugsitzes können durch die Dimensionierung und Anzahl der verwendeten Befestigungselemente sowie die Art der verwendeten Befestigung auf die gewünschte Stabilität eingestellt werden. Diese hängt beispielsweise vom Einsatzzweck im Innern des Kraftfahrzeuges sowie von den voraussichtlich in der Staubox zu transportierenden Gegenständen ab. Bei schweren Gegenständen, die in der Staubox transportiert werden sollen, ist eine stabilere Befestigung nötig. Gegebenenfalls existieren auch gesetzliche Anforderungen an die Stabilität der Verbindungen, um beispielsweise einen Überrollschutz zu gewährleisten, so dass die Staubox sich auch bei einem Unfall des Kraftfahrzeuges, beispielsweise mit einem Überschlag, nicht von ihrer Position löst und für die Insassen des Kraftfahrzeugs zu einer Gefahr wird.

Daher ist es in den allermeisten Fällen sinnvoll, wenn die Verbindung zwischen dem Positionierelement und der Staubox durch mehrere Befestigungselemente gebildet wird. Gleiches gilt für die Verbindung zwischen dem Positionierelement und dem Sitzgestell des Kraftfahrzeugsitzes. Auch hier sind vorteilhafterweise mehrere Befestigungselemente vorgesehen.

In beiden Fällen werden die mehreren Befestigungselemente vorzugsweise so angeordnet, dass sie optimal der Form des jeweiligen Gegenstandes, an dem sie befestigt werden sollen, nachgebildet und angepasst sind. Die Position einer Mehrzahl an ersten Befestigungselementen folgt dabei folglich vorzugsweise einer Oberfläche der Staubox, an der sie angeordnet werden sollen. Gleichzeitig folgt die Position einer Mehrzahl der zweiten Befestigungselemente der Form des Sitzgestells und ist in optimaler Weise auf die Anordnung der wenigstens einen Ausnehmung im Sitzgestell des Kraftfahrzeuges angepasst. Auf diese Weise wird zudem erreicht, dass ein und dieselbe Staubox für unterschiedlichste Kraftfahrzeugtypen gegebenenfalls sogar unterschiedlicher Hersteller verwendbar ist. Soll eine Staubox mit einer bestimmten geometrischen Form und Kontur in einem Kraftfahrzeug verwendet werden, so muss lediglich ein dafür speziell vorgesehenes Positionierelement ausgewählt werden, das sowohl auf die geometrische Form und Kontur der Staubox als auch an die Form und Position der Ausnehmungen am Sitzgestell des Kraftfahrzeugsitzes angepasst ist. Eine umfangreiche kosten- und zeitaufwändige Lagerhaltung unterschiedlicher Stauboxen für unterschiedliche Kraftfahrzeuge entfällt. Zudem können auch unterschiedliche Stauboxformen verwendet werden. Dazu muss lediglich für jede gewünschte Stauboxform ein separates Positionierelement vorgehalten werden. Auf diese Weise bildet das Positionierelement gleichzeitig ein Adapterelement, das eine Verbindung zwischen dem Sitzgestell des Kraftfahrzeuges und der Staubox ermöglicht. In einer bevorzugten Ausgestaltung ist das Positionierelement aus einem Metall, beispielsweise aus Stahl. Auf diese Weise wird bei einfacher Handhabung die nötige Stabilität gewährleistet.

Dadurch, dass die Staubox am Sitzgestell eines Kraftfahrzeugsitzes befestigt wird, ist die Staubox nun auch an einer Vielzahl unterschiedlicher Positionen innerhalb des Kraftfahrzeuges verwendbar. Eine Vielzahl von Kraftfahrzeugen bietet heute die Möglichkeit, einen oder mehrere Kraftfahrzeugsitze zu entfernen. Sobald folglich neben einem Kraftfahrzeugsitz ausreichend Platz ist, um eine Staubox dort anzuordnen, kann mittels eines geeigneten Positionierelementes diese Anordnung stattfinden. Eine Staubox kann somit nicht nur zwischen dem Fahrer- und Beifahrersitz, sondern beispielsweise auch zwischen zwei Kraftfahrzeugsitzen der Rückbank oder neben einem Kraftfahrzeugsitz der Rückbank angeordnet werden. Dazu ist auch hier keine bauliche Veränderung oder Beschädigung des Kraftfahrzeuges nötig. Es muss lediglich ein geeignetes Positionierelement verwendet werden.

Wird eine derartige Staubox beispielsweise an einem Frontsitz eines Kraftfahrzeuges, beispielsweise dem Beifahrersitz, angeordnet und dieser in seiner Position beispielsweise in Fahrtrichtung verschoben, kann durch die Befestigung des Positionierelementes am Sitzgestell des Kraftfahrzeuges erreicht werden, dass die Staubox dieser Bewegung folgt. Wird hingegen die Staubox mit dem Positionierelement an einem unbeweglichen Anteil des Sitzgestells angeordnet, ist die Staubox nicht in der Lage, sich mit dem Fahrzeugsitz zu bewegen. Eine relativ zum Fahrzeugsitz fixierte Staubox, die folglich einer Verschiebebewegung des Fahrzeugsitzes folgt, hat den Vorteil, dass eine Person, die auf dem betreffenden Kraftfahrzeugsitz Platz genommen hat, unabhängig von der Position des Sitzes immer einfachen und gleichen Zugriff auf den Inhalt der Staubox hat. Ein versehentliches Vorbeigreifen oder Vergreifen wird auf diese Weise erschwert oder sogar nahezu ausgeschlossen.

In einer vorteilhaften Ausgestaltung des Befestigungssystems ist die Staubox durch das wenigstens eine Positionierelement in wenigstens zwei unterschiedlichen Positionen relativ zu dem Kraftfahrzeugsitz positionierbar. Dies kann beispielsweise dadurch erreicht werden, dass zwei unterschiedliche Sets von zweiten Befestigungselementen an dem Positionierelement vorgesehen sind, von denen immer jeweils nur ein Set verwendet wird. Alternativ oder zusätzlich dazu können auch beispielsweise Langlöcher am Positionierelement vorgesehen sein, durch die Schrauben geführt werden, die ebenfalls durch die Ausnehmung des Sitzgestells geführt werden. Auf diese Weise lässt sich die Position des Positionierelementes relativ zum Sitzgestell und damit auch die Position der Staubox, die am Positionierelement angeordnet ist, relativ zum Sitzgestell stufenlos einstellen. Über Form, Länge und Richtung der Langlöcher lässt sich der Bereich, über den diese Einstellung möglich ist, beliebig einstellen.

Alternativ oder zusätzlich dazu kann es beispielsweise sinnvoll sein, das Positionierelement in beispielsweise zwei unterschiedlichen Orientierungen, beispielsweise um 180 Grad zueinander versetzt, an dem Sitzgestell anordnen zu können. Auch dadurch ist es möglich, unterschiedliche Positionierungen und Orientierungen der Staubox relativ zum Sitzgestell des Kraftfahrzeugsitzes zu erreichen. Dadurch wird die Flexibilität der Einsetzbarkeit der Staubox weiter erhöht.

Vorteilhafterweise weist das wenigstens eine Positionierelement wenigstens ein drittes Befestigungselement zum Befestigen an einem zweiten Sitzgestell eines zweiten Kraftfahrzeugsitzes des Kraftfahrzeugs auf. Mit einem derartigen Positionierelement ist es folglich möglich, die Staubox an zwei benachbarten Kraftfahrzeugsitzen gleichzeitig anzuordnen und so die Stabilität der Verbindung zu erhöhen. Auf diese Weise können auch besonders schwere und/oder empfindliche Gegenstände im Inneren der Staubox aufbewahrt werden, ohne dass sie auch bei heftigen Fahrmanövern die Möglichkeit haben, die Staubox aus ihrer Verankerung zu reißen.

Als vorteilhaft hat sich dabei herausgestellt, wenn das wenigstens eine zweite Befestigungselement und das wenigstens eine dritte Befestigungselement identisch ausgebildet sind. Zudem ist es möglich, die Art der Befestigungselemente identisch zu wählen, die Position und Orientierung der jeweiligen Befestigungselemente jedoch an gegebenenfalls unterschiedliche Sitzgestelle der beiden einander gegenüberliegenden Kraftfahrzeugsitze anzupassen. So ist es beispielsweise denkbar, dass ein Fahrersitz eines Kraftfahrzeuges ein anderes Sitzgestell aufweist als ein Beifahrersitz. Diesen unterschiedlichen Anordnungen der Ausnehmungen in den jeweiligen Sitzgestellen kann über eine unterschiedliche Anordnung der jeweiligen Befestigungselemente am Positionierelement Rechnung getragen werden.

Vorzugsweise weist das Befestigungssystem zudem wenigstens ein zweites Positionierelement auf. Als besonders vorteilhaft hat sich dabei herausgestellt, wenn das wenigstens eine zweite Positionierelement wenigstens ein drittes Befestigungselement zum Befestigen an einem zweiten Sitzgestell eines zweiten Kraftfahrzeugsitzes des Kraftfahrzeugs aufweist. Anstelle eines einzelnen Positionierelementes, das an beiden einander gegenüberliegenden Kraftfahrzeugsitzen befestigbar ist, ist es auch möglich, zwei unterschiedliche Positionierelemente vorzusehen, die jeweils die Verbindung zwischen der zu befestigenden Staubox und einem der beiden Kraftfahrzeugsitze ermöglichen. Natürlich ist es auch möglich, zwei Positionierelemente vorzusehen, die jeweils an beiden Kraftfahrzeugsitzen angeordnet werden können.

Vorteilhafterweise sind die Positionierelemente an einer Seitenfläche der Staubox befestigbar. Dies ist insbesondere für den Fall von Vorteil, dass durch das Positionierelement die Staubox lediglich an einem Sitzgestell eines Kraftfahrzeugsitzes angeordnet werden soll.
In einer anderen Ausgestaltung eines Befestigungssystems sind die Positionierelemente an einer Unterseite der Staubox befestigbar. Dies ist insbesondere für den Fall vorteilhaft, dass durch ein Positionierelement eine Verbindung zwischen der Staubox und zwei Kraftfahrzeugsitzen hergestellt werden soll. Natürlich ist es auch möglich, beide Ausgestaltungen miteinander zu kombinieren, und beispielsweise ein Positionierelement vorzusehen, das an der Unterseite der Staubox und beispielsweise an zwei Kraftfahrzeugsitzen befestigbar ist, während ein weiteres vorgesehenes Positionierelement an einer Seitenfläche der Staubox und an lediglich einem der Kraftfahrzeugsitze befestigt ist. Durch geschickte Wahl und Kombination dieser Möglichkeiten ist es möglich, den baulichen Voraussetzungen im Inneren des Kraftfahrzeuges Rechnung zu tragen.

Eine erfindungsgemäße Stauraumeinrichtung umfasst eine Staubox und ein hier beschriebenes Befestigungssystem. Dabei können beispielsweise Staubox und Positionierelemente bereits miteinander verbunden oder einstückig ausgebildet sein. Insbesondere für den Fall, dass unterschiedliche Stauboxformen für unterschiedliche Kraftfahrzeugtypen unterschiedlicher Kraftfahrzeughersteller vorgesehen werden sollen, ist es jedoch von Vorteil, die Positionierelemente und die jeweilige Staubox als separate Bauteile vorzusehen, die gegebenenfalls vormontiert ausgeliefert und verkauft werden.

Ein erfindungsgemäßes Kraftfahrzeug weist eine derartige Stauraumeinrichtung auf.

Mit Hilfe einer Zeichnung wird nachfolgend ein Ausführungsbeispiel der vorliegenden Erfindung näher erläutert. Es zeigt
- Figur 1: - die Darstellung eines Positionierelementes gemäß einem ersten Ausführungsbeispiel der vorliegenden Erfindung,
- Figur 2: - das Positionierelement aus Figur 1 aus einer anderen Perspektive,
- Figur 3: - eine Kombination aus Staubox, Positionierelement und Sitzgestell
- Figur 4: - ein Positionierelement gemäß einem weiteren Ausführungsbeispiel der vorliegenden Erfindung,
- Figur 5: - das Positionierelement aus Figur 4 aus einer anderen Perspektive,
- Figur 6: - ein Positionierelement, das an einer Staubox befestigt ist,
- Figur 7: - die Staubox mit befestigtem Positionierelement aus Figur 6 in einer anderen Perspektive und
- Figur 8: - eine in ein Kraftfahrzeug eingebaute Staubox.

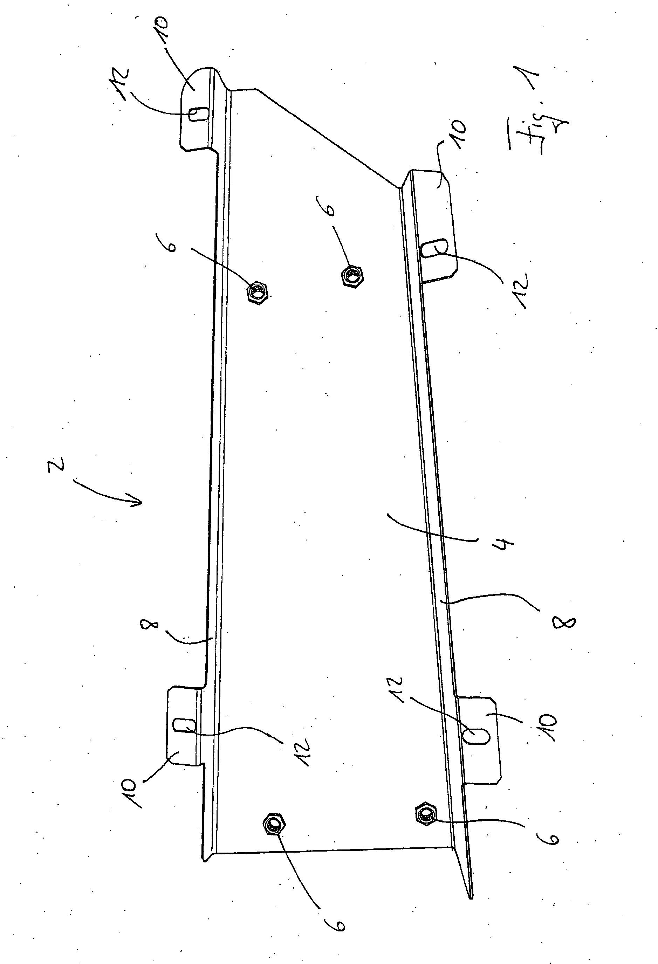

Figur 1 zeigt ein Positionierelement 2 für ein Befestigungssystem gemäß einem ersten Ausführungsbeispiel der vorliegenden Erfindung. Es umfasst eine Metallplatte 4, die die gewünschte Festigkeit und Biegesteifigkeit für das Positionierelement 2 bereitstellt. Man erkennt im Bereich der Metallplatte 4 erste Befestigungselemente 6. Diese sind im gezeigten Ausführungsbeispiel als Bohrung dargestellt, durch die beispielsweise Schrauben oder Klips- oder Schnappverbinder geführt werden können. Durch diese ersten Befestigungselemente 6 ist das Positionierelement an einer Staubox befestigbar, die in Figur 1 nicht dargestellt ist.

Das in Figur 1 dargestellte Positionierelement 2 verfügt am oberen und unteren Rand über jeweils eine vorspringende Leiste 8, die sich in einer Richtung senkrecht zur Zeichenebene erstrecken. An diesen Leisten 8 sind jeweils zwei Laschen 10 angeordnet, in denen jeweils ein zweites Befestigungselement 12 vorgesehen ist, das im in Figur 1 gezeigten Ausführungsbeispiel ebenfalls in Form einer Bohrung vorliegt. Auch durch diese Bohrungen lassen sich Schrauben, Nieten, Klips- oder Schnappverbinder hindurch führen, die anschließend in eine Ausnehmung in einem Sitzgestell des Kraftfahrzeugs eingreifen und so das Positionierelement 2 relativ zu dem Sitzgestell positionieren. Man erkennt, dass die Bohrungen der zweiten Befestigungselemente 12 als Langloch ausgebildet sind, um so eine optimale Positionierung relativ zu Ausnehmungen im Sitzgestell zu erreichen. Zudem ist es möglich, innerhalb eines gewissen Spielraumes das Positionierelement 2 relativ zum Sitzgestell des Kraftfahrzeugsitzes zu verschieben und so die Ausrichtung einer an dem Positionierelement 2 befindlichen Staubox relativ zum Sitzgestell zu verändern und einzustellen.

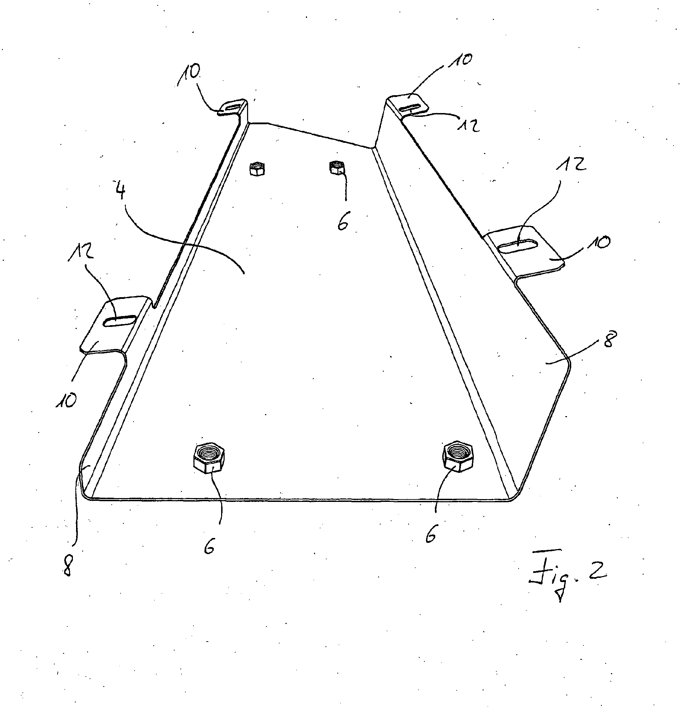

Figur 2 zeigt das Positionierelement 2 aus Figur 1 aus einer anderen Perspektive. Man erkennt, dass die Metallplatte 4 nicht zwangsläufig über ihre gesamte Ausdehnung eben sein muss, sondern vorteilhafterweise einer Form der Staubox, an der das Positionierelement 2 angeordnet wird, folgt. Gleiches gilt für die Laschen 10, die vorteilhafterweise ebenfalls so angeordnet sind, dass sie optimal zu einem Sitzgestell und den darin vorhandenen Ausnehmungen positioniert werden können. Man erkennt beispielsweise in Figur 2, dass die Leisten 8 unterschiedlich lang sind und somit unterschiedlich weit von der Metallplatte 4 hervorstehen. Damit wird eine optimale Anpassung der an den Leisten 8 angeordneten Laschen 10 relativ zum Sitzgestell des Kraftfahrzeugsitzes erreicht.

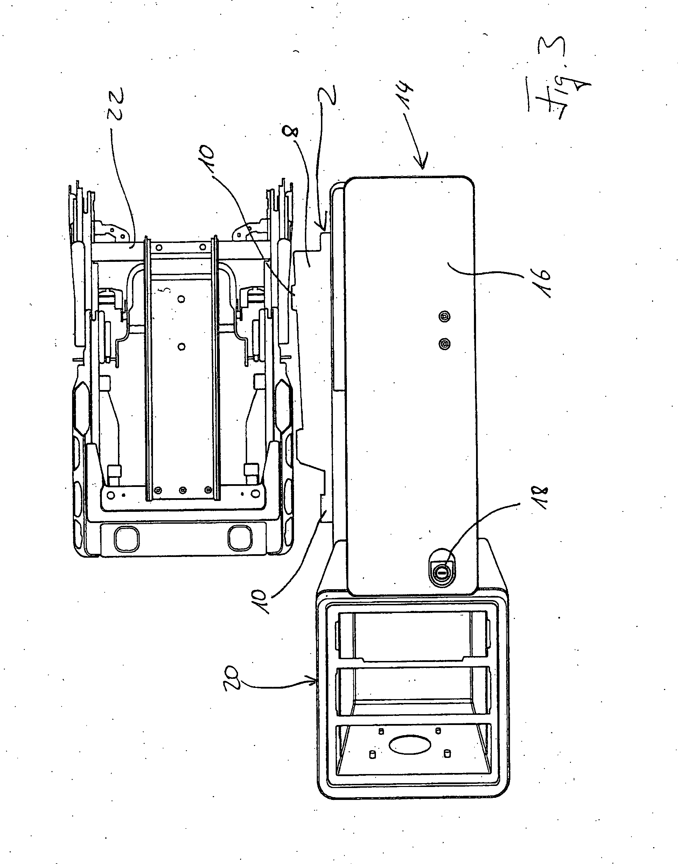

Figur 3 zeigt eine Staubox 14, in einer Ansicht von oben. Man erkennt einen Deckel 16, der durch ein Schloss 18 abschließbar ist. An einer Seitenwand 20 der Staubox 14 ist das Positionierelement 2 aus den Figuren 1 und 2 angeordnet. Man erkennt, dass die beiden Leisten 8 von der Seitenwand 20 der Staubox 14 hervorspringen.

In Figur 3 ist zudem ein Sitzgestell 22 eines Kraftfahrzeugsitzes dargestellt. Man erkennt auch in dieser Darstellung, dass das Sitzgestell 22 kein massiver Block mit durchgehenden Seitenflächen ist, sondern über eine Vielzahl von Ausnehmungen und Durchbrüchen verfügt, in die die zweiten Befestigungselemente 12 eingreifen. Dadurch ist eine einfache, schnelle und dennoch sichere Befestigung der Staubox 14 im Inneren eines Kraftfahrzeuges möglich, ohne dass bauliche Veränderungen oder Beschädigungen am Kraftfahrzeug vorgenommen werden müssten.

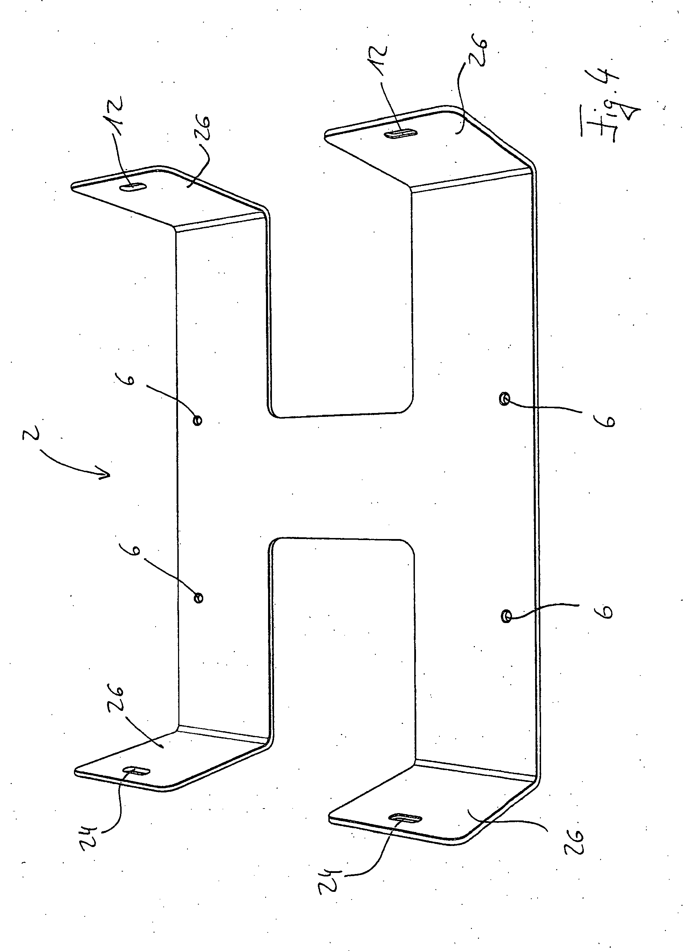

Figur 4 zeigt das Positionierelement 2 gemäß einem weiteren Ausführungsbeispiel der vorliegenden Erfindung. Im mittleren Bereich verfügt das Positionierelement 2 über vier erste Befestigungselemente 6, die wieder als Bohrung ausgebildet sind. Auch hier können Schrauben oder andere Verbindungselemente hindurch geführt werden, so dass die ersten Befestigungselemente 6 zur Befestigung einer Staubox 14, die in Figur 4 nicht dargestellt ist, dienen können.

Anders als das Positionierelement 2 gemäß den Figuren 1 und 2 verfügt dieses Positionierelement 2 in Figur 4 über zwei zweite Befestigungselemente 12 sowie über zwei dritte Befestigungselemente 24. Dabei ist das in Figur 4 gezeigte Positionierelement 2 symmetrisch ausgebildet, so dass die zweiten Befestigungselemente 12 und die dritten Befestigungselemente 24 identisch ausgebildet sind. Bei beiden handelt es sich um Langlöcher, so dass eine Positionierung des Positionierelementes 2 relativ zu einem Sitzgestell 22 eines Kraftfahrzeugsitzes in einem gewissen Bereich einstellbar ist.

Mit dem in Figur 4 gezeigten Positionierelement 2 ist es folglich möglich, eine Staubox 14, die durch die ersten Befestigungselemente 6 mit dem Positionierelement 2 verbunden wird, über die zweiten Befestigungselemente 12 sowohl mit einem Sitzgestell 22 eines ersten Kraftfahrzeugsitzes zu verbinden, als auch eine Verbindung zu einem Sitzgestell 22 eines zweiten Kraftfahrzeugsitzes herzustellen, indem die dritten Befestigungselemente 24 verwendet werden. Sowohl die zweiten Befestigungselemente 12 als auch die dritten Befestigungselemente 24 befinden sich im in Figur 4 gezeigten Ausführungsbeispiel an separaten Vorsprüngen 26. Je nachdem, ob diese Vorsprünge 26 nach oben oder nach unten hervorspringend angeordnet werden, kann eine Staubox 14 in zwei unterschiedlichen Positionierungen relativ zu einem Sitzgestell angeordnet werden.

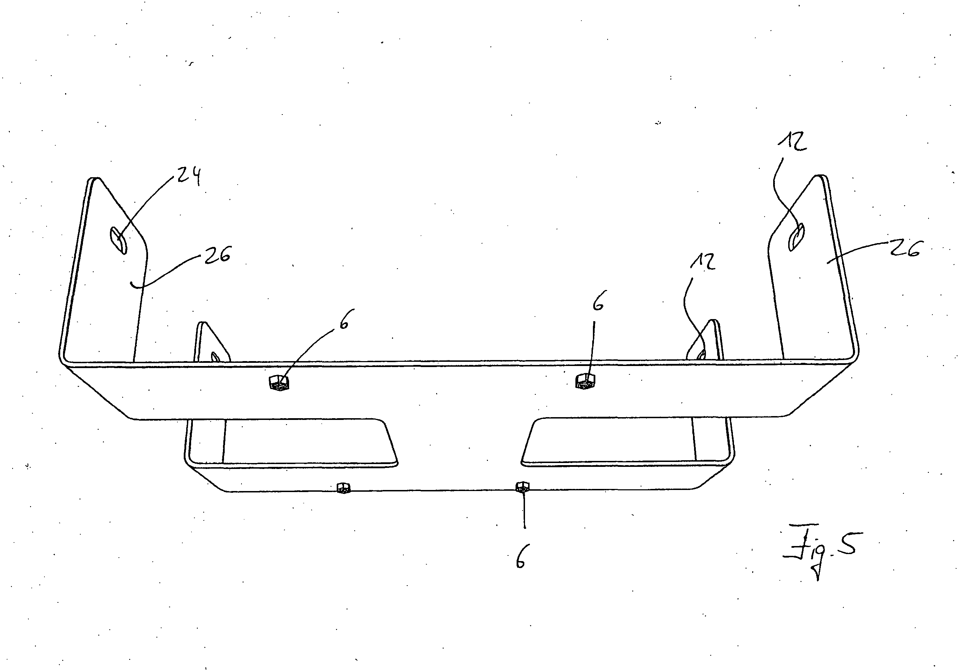

Figur 5 zeigt das Positionierelement 2 aus Figur 4 aus einer anderen Perspektive. Für den Fall, dass die Sitzgestelle 22 des ersten Fahrzeugsitzes und des zweiten Fahrzeugsitzes, mit denen das Positionierelement 2 über die zweiten Befestigungselemente 12 beziehungsweise die dritten Befestigungselemente 24 verbunden wird, unterschiedlich ausgebildet sind, ist es natürlich von Vorteil, die jeweiligen Vorsprünge 26 und die zweiten und dritten Befestigungselemente 12, 24 an die Form der Sitzgestelle anzupassen.

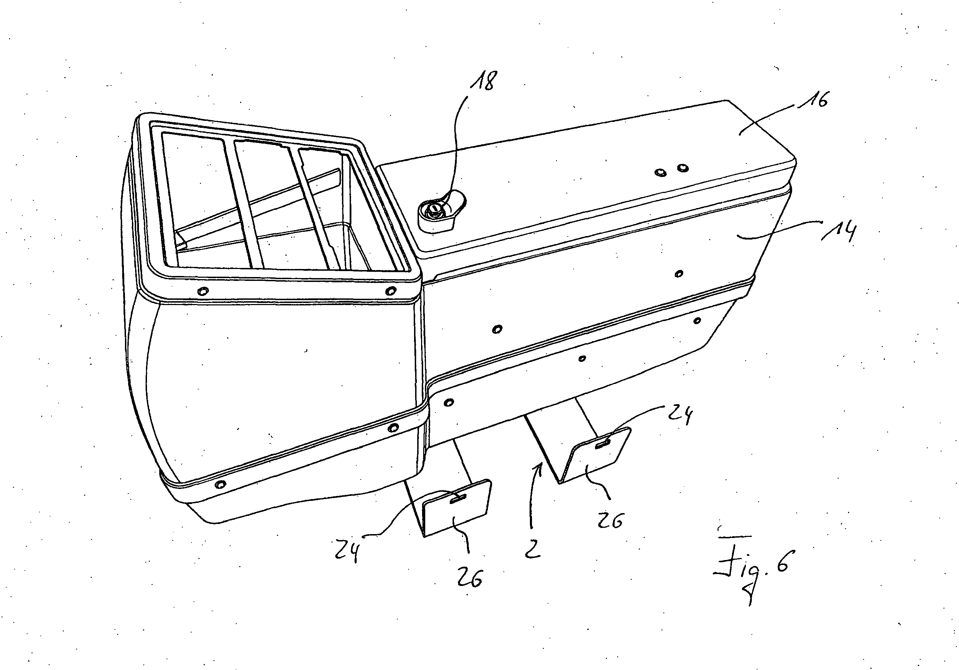

Figur 6 zeigt das Positionierelement 2 aus den Figuren 4 und 5 im an eine Staubox 14 montierten Zustand. Dabei sind die Vorsprünge 26 nach oben orientiert, so dass die Staubox 14 in einer abgesenkten Position relativ zu den in Figur 6 nicht gezeigten Sitzgestellen angeordnet wird.

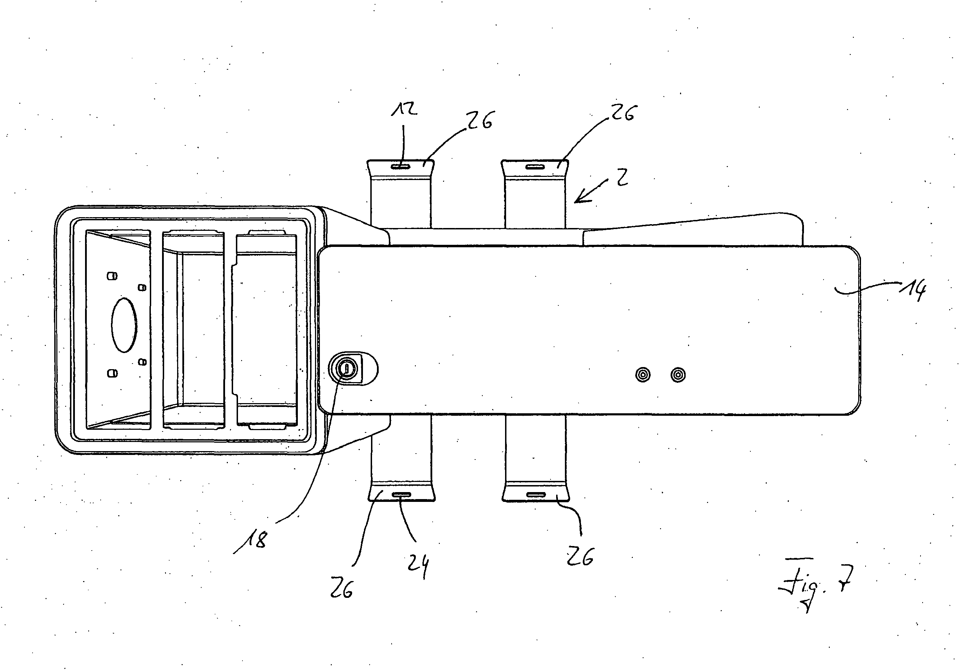

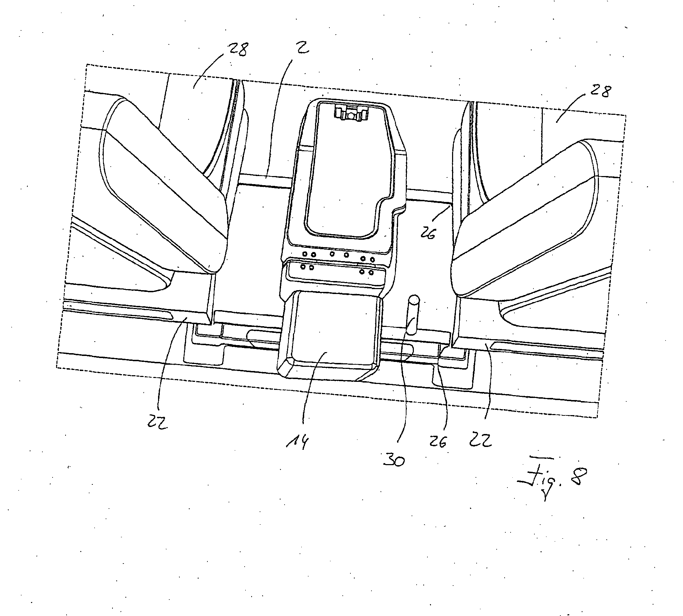

Figur 7 zeigt die Staubox 14 mit dem daran befestigten Positionierelement 2 in einer Draufsicht. Die Positionen der einzelnen Vorsprünge 26 mit den sich daran befindenden zweiten Befestigungselementen 12 beziehungsweise dritten Befestigungselementen 24 sind dabei an die spezielle geometrische Form und Kontur der einzelnen Sitzgestelle 22, die in Figur 8 nicht dargestellt sind, angepasst.

Figur 8 zeigt eine Staubox 14, die über ein Positionierelement 2 in einem Kraftfahrzeug angeordnet ist. Rechts und Links neben der Staubox ist jeweils ein Kraftfahrzeugsitz 28 dargestellt, die jeweils über ein Sitzgestell 22 verfügen. Das Positionierelement 2 verfügt über die bereits gezeigten Vorsprünge 26, wobei die zweiten Befestigungselemente 12 und die dritten Befestigungselemente 24, die sich an den jeweiligen Vorsprüngen 26 befinden, mit den Sitzgestellen 22 der beiden Kraftfahrzeugsitze 28 verbunden sind. Die Vorsprünge 26 sind dabei nach unten orientiert, so dass die Staubox 14 in einer angehobenen Position angeordnet ist. Man erkennt, dass der zwischen den beiden Kraftfahrzeugsitzen 28 vorhandene Raum durch die Staubox 14 nicht optimal ausgenutzt wird, da auch größere Stauboxen 14 durchaus in diesen Zwischenraum hineinpassen. Das Auswechseln der Staubox 14 gegen eine andere Staubox ist problemlos möglich, da auch eine neue Staubox 14 lediglich am Positionierelement 2 durch die ersten Befestigungselemente 6 angeordnet wird. Bei dem in Figur 8 gezeigten Positionierelement 2 ist als zusätzliches Element eine Halterung 30 vorgesehen, in der beispielsweise eine Anhaltekelle für Polizeieinsätze angeordnet werden kann.

### Bezugszeichenliste

- 2: Positionierelement
- 4: Metallplatte
- 6: erstes Befestigungselement
- 8: Leiste
- 10: Lasche
- 12: zweites Befestigungselement
- 14: Staubox
- 16: Deckel
- 18: Schloss
- 20: Seitenwand
- 22: Sitzgestell
- 24: drittes Befestigungselement
- 26: Vorsprung
- 28: Kraftfahrzeugsitz
- 30: Halterung

## Patentansprüche

1. Befestigungssystem zum Befestigen einer Staubox (14) in einem Kraftfahrzeug, das wenigstens einen Kraftfahrzeugsitz (28) mit einem Sitzgestell (22) aufweist, wobei das Sitzgestell (22) wenigstens eine Ausnehmung aufweist,
wobei das Befestigungssystem
wenigstens ein Positionierelement (2) aufweist, das
wenigstens ein erstes Befestigungselement (6) zum Befestigen des Positionierelementes (2) an der Staubox (14) und
wenigstens ein zweites Befestigungselement (12) zum Befestigen des Positionierelementes (2) an dem Sitzgestell (22) aufweist,
**dadurch gekennzeichnet, dass** das wenigstens eine zweite Befestigungselement (12) ausgebildet ist, um in die wenigstens eine Ausnehmung des Sitzgestells (22) einzugreifen.

2. Befestigungssystem nach Anspruch 1, **dadurch gekennzeichnet, dass** das wenigstens eine erste Befestigungselement (6) eingerichtet ist, in dafür in der Staubox (14) vorgesehene Ausnehmungen einzugreifen.

3. Befestigungssystem nach Anspruch 1 oder 2, **dadurch gekennzeichnet, dass** die Staubox (14) durch das wenigstens eine Positionierelement (2) in wenigstens zwei unterschiedlichen Positionen relativ zu dem Kraftfahrzeugsitz (28) positionierbar ist.

4. Befestigungssystem nach Anspruch 1, 2 oder 3, **dadurch gekennzeichnet, dass** das wenigstens eine Positionierelement (2) wenigstens ein drittes Befestigungselement (24) zum Befestigen des Positionierelementes (2) an einem zweiten Sitzgestell (22) eines zweiten Kraftfahrzeugsitzes (28) des Kraftfahrzeugs aufweist.

5. Befestigungssystem nach einem der vorstehenden Ansprüche, **dadurch gekennzeichnet, dass** das Befestigungssystem zudem wenigstens ein zweites Positionierelement (2) aufweist.

6. Befestigungssystem nach Anspruch 5, **dadurch gekennzeichnet, dass** das wenigstens eine zweite Positionierelement (2) wenigstens ein drittes Befestigungselement (24) zum Befestigen an einem zweiten Sitzgestell (22) eines zweiten Kraftfahrzeugsitzes (28) des Kraftfahrzeugs aufweist.

7. Befestigungssystem nach einem der vorstehenden Ansprüche, **dadurch gekennzeichnet, dass** die Positionierelemente (2) an einer Seitenfläche (20) der Staubox (14) befestigbar sind.

8. Befestigungssystem nach einem der vorstehenden Ansprüche, **dadurch gekennzeichnet, dass** die Positionierelemente (2) an einer Unterseite der Staubox (14) befestigbar sind.

9. Stauraumeinrichtung mit einer Staubox (14) und einem Befestigungssystem nach einem der vorstehenden Ansprüche.

10. Kraftfahrzeug mit einer Stauraumeinrichtung nach Anspruch 9.

## Claims

1. Attachment system for attachment of a storage container (14) in a motor vehicle which has at least one motor vehicle seat (28) with a seat frame (22), wherein the seat frame (22) has at least one recess, wherein the attachment system has at least one positioning element (2) which has at least one first attachment element (6) for attachment of the positioning element (2) to the storage container (14) and at least one second attachment element (12) for attachment of the positioning element (2) to the seat frame (22), **characterized in that** the at least one second attachment element (12) is designed in order to engage in the at least one recess of the seat frame (22).

2. Attachment system according to Claim 1, **characterized in that** the at least one first attachment element (6) is designed to engage in recesses provided therefor in the storage container (14).

3. Attachment system according to Claim 1 or 2, **characterized in that** the storage container (14) is positionable in at least two different positions relative to the motor vehicle seat (28) by the at least one positioning element (2).

4. Attachment system according to Claim 1,2 or 3, **characterized in that** the at least one positioning element (2) has at least one third attachment element (24) for attachment of the positioning element (2) to a second seat frame (22) of a second motor vehicle seat (28) of the motor vehicle.

5. Attachment system according to one of the preceding claims, **characterized in that** the attachment system also has at least one second positioning element (2).

6. Attachment system according to Claim 5, **characterized in that** the at least one second positioning element (2) has at least one third attachment element (24) for attachment to a second seat frame (22) of a second motor vehicle seat (28) of the motor vehicle.

7. Attachment system according to one of the preceding claims, **characterized in that** the positioning elements (2) are attachable to a side surface (20) of the storage container (14).

8. Attachment system according to one of the preceding claims, **characterized in that** the positioning elements (2) are attachable to a lower side of the storage box (14).

9. Storage compartment device with a storage container (14) and an attachment system according to one of the preceding claims.

10. Motor vehicle with a storage compartment device according to Claim 9.

## Revendications

1. Système de fixation pour fixer un coffret de rangement (14) dans un véhicule automobile qui comprend au moins un siège de véhicule (28) avec un bâti de siège (22), dans lequel le bâti de siège (22) présente au moins un évidement,
dans lequel le système de fixation comprend au moins un élément de positionnement (2) qui comprend
- au moins un premier élément de fixation (6) pour fixer l'élément de positionnement (2) sur le coffret de rangement (14), et
- au moins un second élément de fixation (12) pour fixer l'élément de positionnement (2) sur le bâti de siège (22),
**caractérisé en ce que** ledit au moins un second élément de fixation (12) est réalisé pour s'engager dans ledit au moins un évidement du bâti de siège (22).

2. Système de fixation selon la revendication 1, **caractérisé en ce que** ledit au moins un premier élément de fixation (6) est conçu pour s'engager dans des évidements prévus à cet effet dans le coffret de rangement (14).

3. Système de fixation selon la revendication 1 ou 2, **caractérisé en ce que** le coffret de rangement (14) est susceptible d'être positionné, au moyen dudit au moins un élément de positionnement (2), dans au moins deux positions différentes par rapport au siège de véhicule (28).

4. Système de fixation selon la revendication 1, 2 ou 3, **caractérisé en ce que** ledit au moins un élément de positionnement (2) comprend au moins un troisième élément de fixation (24) pour fixer l'élément de positionnement (2) sur un second bâti de siège (22) d'un second siège (28) du véhicule automobile.

5. Système de fixation selon l'une des revendications précédentes, **caractérisé en ce que** le système de fixation comprend en outre au moins un second élément de positionnement (2).

6. Système de fixation selon la revendication 5, **caractérisé en ce que** ledit au moins un second élément de positionnement (2) comprend au moins un troisième élément de fixation (24) pour la fixation sur un second bâti de siège (22) d'un second siège (28) du véhicule automobile.

7. Système de fixation selon l'une des revendications précédentes, **caractérisé en ce que** les éléments de positionnement (2) sont susceptibles d'être fixés sur une surface latérale (20) du coffret de rangement (14).

8. Système de fixation selon l'une des revendications précédentes, **caractérisé en ce que** les éléments de positionnement (2) sont susceptibles d'être fixés sur une face inférieure du coffret de rangement (14).

9. Système de rangement comprenant un coffret de rangement (14) et un système de fixation selon l'une des revendications précédentes.

10. Véhicule automobile doté d'un système de rangement selon la revendication 9.
